Europäisches Patentamt

European Patent Office

Office européen des brevets

(11) Veröffentlichungsnummer: **0 384 020**
**A2**

(12) **EUROPÄISCHE PATENTANMELDUNG**

(21) Anmeldenummer: 89122943.7

(51) Int. Cl.⁵: **F16M 11/18**

(22) Anmeldetag: 12.12.89

Die Bezeichnung der Erfindung wurde geändert
(Richtlinien für die Prüfung im EPA, A-III, 7.3).

(30) Priorität: 25.01.89 DE 3902076

(43) Veröffentlichungstag der Anmeldung:
29.08.90 Patentblatt 90/35

(84) Benannte Vertragsstaaten:
CH DE FR GB IT LI NL

(71) Anmelder: **Messerschmitt-Bölkow-Blohm**
**Gesellschaft mit beschränkter Haftung**
**Robert-Koch-Strasse**
**D-8012 Ottobrunn(DE)**

(72) Erfinder: **Koerv, Peter**
**Beethovenstrasse 20a**
**D-8011 Vatenstetten(DE)**

(54) **Anordnung zur Bildübertragung mit einer Videokamera.**

(57) Die Anordnung weist eine Videokamera auf, die an einem verfahrbaren Wagen befestigt ist, der wenigstens ein Tragrad aufweist, das sich auf einer Tragschiene abstützt. Der Wagen ist mit einem Antrieb für das Tragrad versehen, einer Steuervorrichtung für den Antrieb, einem Manipulator für die Videokamera, einem Sende- und Empfangsgerät für die ferngesteuerten Signale, einer Antenne und mindestens einer Führungsrolle. Die stationäre Tragkonstruktion weist mindestens eine Führungsschiene auf, auf der sich Führungsrollen abstützen sowie einen Schlitzhohlleiter, in den die Antenne des Wagens eingreift.

FIG. 2

EP 0 384 020 A2

## Anordnung zur ferngesteuerten, spurgeführten Bildübertragung

Die vorliegende Erfindung betrifft eine Anordnung zur ferngesteuerten, spurgeführten Bildübertragung mit einer Videokamera, die an einem fahrbaren Wagen befestigt ist, der wenigstens ein Tragrad aufweist, das sich auf einer Tragschiene abstützt.

Die herkömmlichen Techniken zur Bildübertragung, z.B. bei Sportveranstaltungen, in Fernsehstudios oder zur Überwachung automatisierter Arbeitsbereiche, sind weitgehend an feste Standorte der Überwachungskamera gebunden, so daß eine, größere Streckenbereiche abdeckende Beobachtung nur unvollständig mit einer Vielzahl von Kameras und aufwendigen Schaltmitteln, oder aus der Vogelperspektive von Masten aus über größere Entfernungen möglich ist. Dabei erfolgt die Übertragung meist über stark behindernde Kabel oder aber kabellos über aufwendige Funkeinrichtungen, die infolge des offenen und strahlenden Verfahrens allen möglichen störenden Umgebungseinflüssen ausgesetzt sind, wie z.B. bauliche und landschaftliche Hindernisse, Reflexionen, Interferenzen, Störfelder und dergleichen. Auch eine denkbare Übertragung mittels Laserlicht erfordert eine geradlinige Sichtverbindung und wird durch Umgebungskonditionen, wie Staub, Regen und Nebel, negativ beeinflußt.

Aufgabe der vorliegenden Erfindung ist es, entlang eines vorgegebenen Kurses, der auch mit Kurven und Überhöhungen versehen sein kann, bewegte Objekte mit hoher Geschwindigkeit ferngesteuert, übertragungstechnisch störungsfrei und unbehindert von Kabeln oder Abschattungen lükkenlos zu beobachten. Dabei soll der Beobachtungsstandpunkt zur Änderung der Perspektive beliebig vor- oder nachfahrend zum Beobachtungsobjekt verschoben werden, wobei die Bildübertragungskamera beliebige räumliche Drehwinkel einnehmen kann, und die Objektiveinstellungen ferngesteuert einstellbar sind.

Ausgehend von einer Anordnung der eingangs genannten Art erfolgt die Lösung dieser Aufgabe mit den im kennzeichnenden Teil des Anspruchs 1 angegebenen Merkmalen; vorteilhafte Ausgestaltungen sind in den Unteransprüchen beschrieben.

Mit der Erfindung wird es ermöglicht, ein ferngesteuertes Abfahren von ausgedehnten Sport-, Versuchs-, Industrieanlagen und dgl. mit Kurven, Überhöhungen usw. unmittelbar neben dem zu beobachtenden Objekt durchzuführen, auch bei hohen Geschwindigkeiten bis etwa 200 km/h, wobei der Vorteil erzielt wird, daß eine raumsparende, kostengünstige Anordnung der Tragschiene des Schlitzhohlleiters und der Stromschienen bzw. des Langstators gewährleistet ist, die dem Verlauf einer zu beobachtenden Strecke bis zu Radien von ca. 1 m angepaßt ist. Die kabel-und kontaktlose sowie von den Umgebungseinflüssen völlig unabhängige und damit störungsfreie, bidirektionale Übertragungstechnik mit dem an und für sich bekannten Schlitzhohlleiter, die bei beliebigen Fahrtgeschwindigkeiten möglich ist, und die konstruktiv eng mit dem Schlitzhohlleiter verbundene Befestigung der Tragschienen und Stromschienen bzw. des Langstatorantriebes ermöglicht eine fehlerfreie, lückenlose Überwachung bzw. Beobachtung von ruhenden oder bewegten Objekten, wie z.B.

- die Bahnverfolgung bei Sportveranstaltungen, wie Pferderennen, Leichtathletik, Eisschnellauf, Radrennen, Motorradrennen, Autorennen (vorzugsweise für Streckenabschnitte, an denen die Kameras ihren Standpunkt verändern sollen), Skirennen mit unübersichtlichen Abschnitten;
- das Abfahren von Kulissen in Fernsehstudios;
- die Verfolgung von Fahrzeugen oder Flugobjekten bei ausgedehnten Versuchsanlagen mit Kameranachführung durch Nachfahren und Winkelverstellung;
- die optische und ggf. zusätzlich akustische Überwachung von Sicherheits- oder Gefahrenbereichen, z.B. das Abfahren von Zäunen oder Abgrenzungen bei Flughäfen, Kraftwerken, Industrie- und Kernforschungsanlagen;
- die Überwachung automatisierter Arbeitsbereiche entweder im Bergbau (wobei der Langstatorantrieb wegen verringerter Explosionsgefahr bevorzugt wird), in industriellen Fertigungsbereichen und
- die Überwachung im Krankenhausbereich, z.B. von großen Intensivstationen mit wenig Personal, wobei eine optische Überwachung bzw. ein Abfragen von Meßgeräten, Infusionseinrichtungen und dgl. erfolgen kann.

Da die Tragkonstruktion erfindungsgemäß aus baukastenähnlichen Elementen bzw. Abschnitten aufgebaut ist, die Standardabmessungen aufweisen, kann die Konstruktion sowohl an Vertikalkrümmungen als auch an Horizontalkrümmungen angepaßt werden, wobei in vorgegebenen Abständen Halterungsvorrichtungen vorgesehen sind, die die einzelnen Tragkonstruktionsabschnitte miteinander verbinden. Dabei können auch Dehnungsausgleichselemente mitintegriert werden, um Temperaturunterschiede auszugleichen.

Im folgenden wird die Erfindung anhand der Zeichnung näher erläutert, in der vorteilhafte Ausführungsbeispiele dargestellt sind. Es zeigen:

Fig. 1 einen Querschnitt durch ein erstes Ausführungsbeispiel eines Wagens mit zugehöriger Tragkonstruktion mit Stromschienen, das insbesondere für horizontale Krümmungen geeignet ist;

Fig. 2 einen Querschnitt durch ein zweites Ausführungsbeispiel eines Wagens mit zugehöriger Tragkonstruktion mit Langstator;

Fig 3 einen Querschnitt durch ein drittes Ausführungsbeispiel eines Wagens mit zugehöriger Tragkonstruktion mit Stromschienen, das vorzugsweise für vertikale Krümmungen geeignet ist und

Fig. 4 einen Querschnitt durch ein viertes Ausführungsbeispiel eines Wagens mit zugehöriger Tragkonstruktion und Langstator.

In den Figuren, in denen gleiche Teile mit gleichen Bezugszeichen versehen sind, ist mit 9 ein Wagen bezeichnet, der entlang einer Tragkonstruktion 10 verschiebbar angeordnet ist und mindestens eine Videokamera 12 trägt.

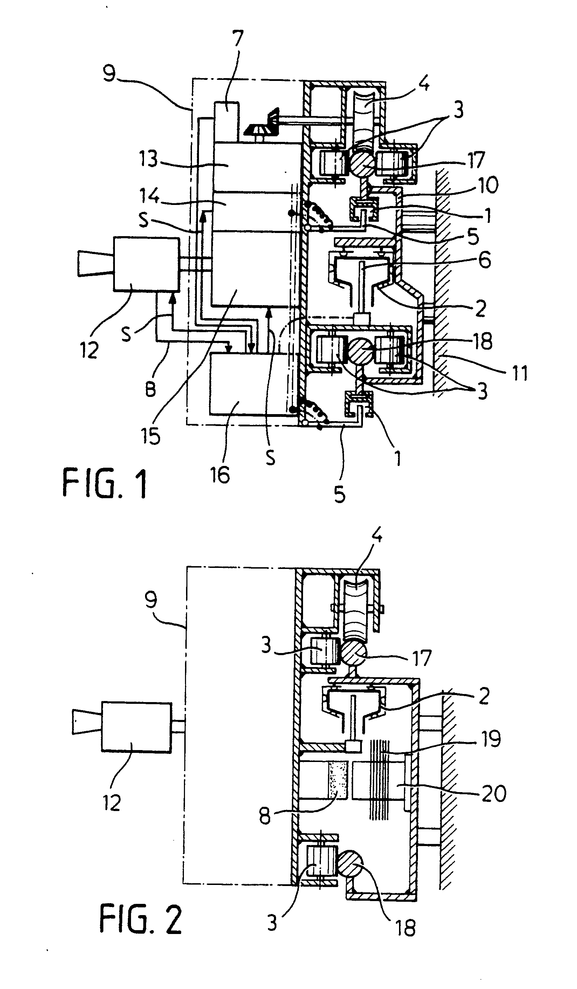

Bei dem in Fig. 1 dargestellten Ausführungsbeispiel, das sich insbesondere für Tragkonstruktionen entlang horizontal gekrümmter Strecken eignet, ist im Wagen 9 ein Tragrad 4 vorgesehen mit einem zugehörigen Antrieb 13. Mit 14 ist eine Steuerung für diesen Antrieb bezeichnet, mit 15 ein Manipulator für die Steuerung der Videokamera 12 und mit 16 ein Sende- und Empfangsgerät zur Aufnahme bzw. Abgabe ferngesteuerter Signale. Zum Empfang und zum Senden dieser Signale ist eine Antenne 6 vorgesehen, während zur spurtreuen Führung des Wagens 9 bei diesem Ausführungsbeispiel vier Führungsrollen 3 vorgesehen sind.

Die zugehörige Tragkonstruktion 10, die an einer Wand, einer Schiene oder einem Tragmasten 11 befestigbar ist, weist im gewählten Ausführungsbeispiel eine Tragschiene 17 auf, auf der sich das Tragrad 4 sowie zwei Führungsrollen abstützen sowie zusätzlich eine Führungsschiene 18, auf der sich zwei weitere Führungsrollen 3 abstützen. Mit 2 ist ein Schlitzhohlleiter bezeichnet, in den die Antenne 6 des Wagens eingreift, zur störungsfreien Übermittlung der Signale. Mit 7 ist ferner ein Weggeber im Wagen 9 bezeichnet.

Mit einer deartigen Anordnung ist es möglich, an einem vorgegebenen Kurs, der auch mit Kurven bis zu einem Mindestradius von 1 m versehen sein kann sowie Überhöhungen aufweist, infolge der Hintereinanderanordnung einer Vielzahl von einzelnen endlichen Tragkonstruktionsabschnitten bewegte Objekte, die mit gleicher Geschwindigkeit auf einem Parallelkurs fahren, bei Geschwindigkeiten bis zu 200 km/h mit einer Videokamera zu beobachten. Die Signale werden dabei übertragungstechnisch störungsfrei und unbehindert von Kabeln oder Abschattungen mittels des Schlitzhohlleiters übertragen. Der Beobachtungsstandpunkt kann zur Änderung der Perspektive beliebig vom Beobachtungsobjekt verschoben werden, wobei auch ein nachfolgendes Objekt angefahren werden kann. Aufgrund des Sende- und Empfangsgerätes sowie des zugehörigen Manipulators für die Videokamera 12 kann diese beliebige räumliche Drehwinkel einnehmen, wobei auch die Objektiveinstellungen, d.h. Fokus- und Bildwinkel, sowie die Höhe durch geeignete Teleskopsteuerung fernsteuerbar sind.

Der Aufbau der Tragkonstruktion entlang eines begrenzten oder endlosen Kurses, mit baukastenähnlichen Elementen bzw. Streckenabschnitten, ermöglicht ein schnelles Auf- und Abbauen und damit ein Verändern des Kurses je nach den örtlichen Anforderungen.

Die stationäre Tragkonstruktion ist derart ausgestaltet, daß alle Funktionsteile, d.h. Tragschiene, Führungsschiene, Schlitzhohlleiter, Stromschiene, nicht nur gerade, sondern auch mit gleichem Krümmungsradius gefertigt werden können. Alle Trag- und Funktionsabschnitte werden in regelmäßigen Abständen entlang eines vorgegebenen Fahrkurses aufgehängt und mit gemeinsamen Halterungsvorrichtungen miteinander verbunden.

Die Trag- und Funktionsabschnitte weisen handhabbare Standardlängen und -krümmungen auf und sind an die Abstände der Halterungsvorrichtungen angepaßt. Entsprechende Dehnungsausgleichelemente können in die Halterungsvorrichtungen integriert sein.

Mit dem in Fig. 2 dargestellten Ausführungsbeispiel ist nur eine Tragschiene 17 im Wagen 9 vorgesehen, auf der sich das Tragrad 4 abstützt. Anstelle eines Antriebes über Elektromotor und Getriebe für das Tragrad 4 ist hier der Wagen 9 mit einem Permanentmagneten 8 versehen, der mit einem ihm zugeordneten Langstator 20 in der Tragkonstruktion zusammenwirkt, der ein an und für sich bekanntes Blechpaket mit einer zugehörigen Wicklung 19 trägt. Diese aus der Magnetschwebetechnik bekannte Konstruktion ersetzt nicht nur den eigenen Antrieb für das Tragrad 4, sondern auch die Stromschienen 1, wobei der Antrieb durch den Permanentmagneten erfolgt, der einerseits als Erregerteil für die stationäre Ausführung des Langstators dient und andererseits durch seine Anziehungskraft an den Langstator für einen entgleisungssicheren Andruck der Traräder und Führungsrollen auch bei beliebigen Wagenlagen ohne zusätzliche Führungsrollen sorgt. Mit einer von der Magnetschwebebahn bekannten induktiven Abtastvorrichtung sowie einer angeschlossenen Zähleinrichtung kann eine Positionssteuerung und Lageregelung des Antriebs erfolgen.

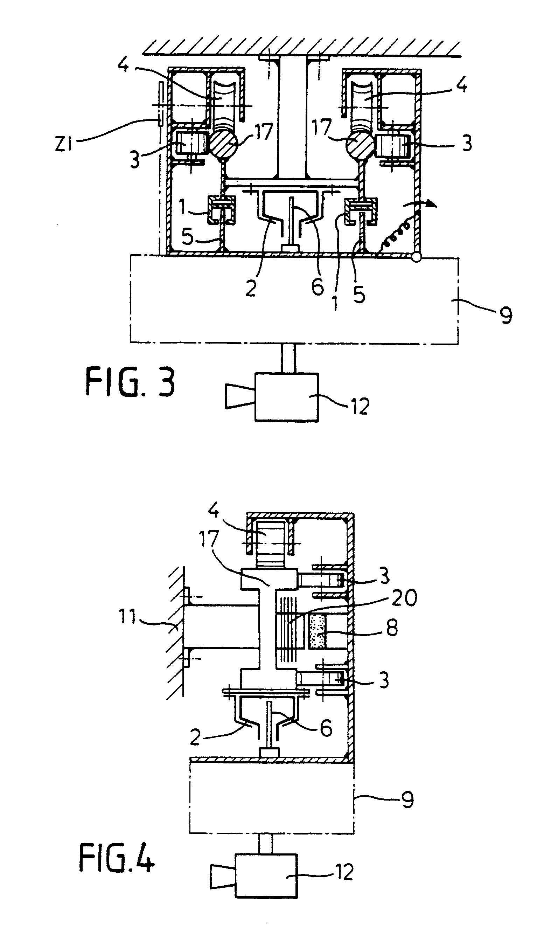

Fig. 3 zeigt einen Schnitt durch ein weiteres Ausführungsbeispiel, das sich insbesondere für vertikale Krümmungen der Tragkonstruktion eignet. Hierbei sind zwei in einer waagrechten Ebene liegende Tragschienen 17 vorgesehen, auf denen sich zwei Tragräder 4 abstützen sowie zwei Führungsrollen 3. Auch hierbei sind wieder zwei Stromschienen 1 vorgesehen, in die Stromabnehmer 5 eingreifen sowie ein Schlitzhohlleiter 2, in den eine entsprechende Antenne 6 eingreift. Mit 21 ist hier der Antrieb für das Tragrad 2 bezeichnet, der z.B. einen Riemen oder eine Kette aufweist.

Bei dem in Fig. 4 dargestellten Schnitt durch ein Ausführungsbeispiel der erfindungsgemäßen Anordnung ist wieder der Antrieb für das Tragrad samt den beiden Stromschienen durch einen Permanentmagneten 8 am Wagen 9 und einen Langstator 20 in der Tragkonstruktion ersetzt. Hierbei genügt ein Tragrad 4 sowie zwei Führungsrollen 3 zum sicheren Verfahren des Wagens 9.

Anstelle oder zusätzlich zur Videokamera kann ein Manipulator zur Handhabung von Werkstücken o.dgl. auf dem Fahrwagen angeordnet sein, der ebenfalls über die Schlitzhohlleiterübertragung ferngesteuert betätigt werden kann.

Die Erfindung sieht also die Kombination der an sich bekannten Schlitzhohlleiter-Übertragungstechnik mit den Funktionselementen Tragen, Führen und Antreiben mit der an sich bekannten Videokamera-Fernsteuertechnik vor, wobei der Antrieb des Wagens entweder über Stromschienen und Elektromotor sowie Getriebe oder über einen stationären Langstator und einen mobilen Permanentmagneten erfolgt. Der Schlitzhohlleiter ermöglicht eine kabel - und berührungslose Datenübertragung von und zum Wagen für das Sende- und Empfangsgerät, für das Senden der Bild- und/oder Meß- oder Stationssignale vom Fahrwagen zu einer Empfangsstation und das Empfangen von Fernsteuersignalen von einer Sendestation für die Wagenantriebs-, Manipulator- und Kamerasteuerung. Der Manipulator ist dabei für beliebige Bewegungen der Videokamera in allen Achsen ausgelegt.

**Ansprüche**

1. Anordnung zur ferngesteuerten, spurgeführten Bildübertragung mit einer Videokamera, die an einem verfahrbaren Wagen befestigt ist, der wenigstens ein Tragrad aufweist, das sich auf einer Tragschiene abstützt, **gekennzeichnet** durch die Kombination folgender Bauteile im beweglichen Wagen:

1. einen Antrieb für das Tragrad,

2 eine Steuervorrichtung für den Antrieb,

3. eine induktive Abtastvorrichtung, die dem Antrieb zugeordnet ist, zur Positionssteuerung und Lageregelung,

4. einen Manipulator für die Videokamera,

5. ein Sende-· und Empfangsgerät für die ferngesteuerten Signale,

6. eine Antenne zum Empfangen und Senden der Signale und

7. mindestens eine Führungsrolle mit folgenden Bauteilen in der stationären Tragkonstruktion:

8. mindestens einer Führungsschiene, auf der sich die Führungsrollen abstützen und

9. einem Schlitzhohlleiter, in den die Antenne des Wagens eingreift.

2. Anordnung nach Anspruch 1, **dadurch gekennzeichnet**, daß der Antrieb einen Riemen oder eine Kette aufweist, einen Elektromotor mit Getriebe und zwei Stromabnehmer mit Gleitkontakten, die mit zwei Stromschienen in der Tragkonstruktion zusammenwirken.

3. Anordnung nach Anspruch 1, **dadurch gekennzeichnet**, daß der Antrieb einen Permanentmagneten aufweist, der mit einem Langstator in der Tragkonstruktion zusammenwirkt.

4. Anordnung nach Anspruch 3, **dadurch gekennzeichnet**, daß dem Antrieb eine induktive Abtastvorrichtung zugeordnet ist, zur Positionssteuerung und Lageregelung.

5. Anordnung nach einem der vorhergehenden Ansprüche, **dadurch gekennzeichnet**, daß die Tragkonstruktion in endliche Abschnitte unterteilt ist.

6. Anordnung nach Anspruch 5, **dadurch gekennzeichnet**, daß ein Teil der Tragkonstruktionsabschnitte in der vertikalen Ebene gekrümmt ist.

7. Anordnung nach Anspruch 5, **dadurch gekennzeichnet**, daß ein Teil der Tragkonstruktionsabschnitte in der horizontalen Ebene gekrümmt ist.

8. Anordnung nach Anspruch 1, **dadurch gekennzeichnet**, daß anstelle der Videokamera oder zusätzlich zur Videokamera ein Manipulator zur Handhabung von Werkstücken, Werkzeugen o.ä. Gegenständen auf dem Fahrwagen angeordnet ist, der ebenfalls über die Schlitzhohlleiterübertragung fernsteuerbar ist.

FIG. 1

FIG. 2

FIG. 3

FIG.4